# EUROPEAN PATENT SPECIFICATION

(11) **EP 1 144 897 B1**
(45) Date of publication and mention of the grant of the patent: **17.01.2007**
(21) Application number: 99973110.2
(22) Date of filing: 25.11.1999
(51) Int. Cl.: F16L 9/133, F16L 11/04, F16L 11/12, F16L 9/12

(54) **THERMOPLASTIC MULTILAYER WATER TRANSMISSION TUBE**
THERMOPLASTISCHER MEHRSCHICHTTRINKWASSERLEITUNG
TUYAU THERMOPLASTIQUE MULTICOUCHE TRANSPORTANT DE L'EAU

(30) Priority: 27.11.1998 NL 1010675
(43) Date of publication of application: 17.10.2001
(73) Proprietor: WAVIN B.V., 8011 CW Zwolle (NL)
(72) Inventor: GAIKEMA, Gjalt, Martinus, NL-7701 LC Dedemsvaart (NL); STOFFELSMA, Jan, Uilke, NL-7772 XC Hardenberg (NL); KREMER, Marinus, Peter, NL-7772 AH Hardenberg (NL)
(74) Representative: Iemenschot, Johannes Andreas
(86) International application number: PCT/NL1999/000724
(87) International publication number: WO 2000/032974

(56) References cited:
- EP-A- 0 686 797
- WO-A-97/30798
- DE-C- 4 132 984
- DE-C- 19 633 133
- GB-A- 2 296 303
- US-A- 5 332 160
- US-A- 5 510 160
- US-A- 5 512 342

## Description

The invention relates to a thermoplastic water transmission tube.

Thermoplastic water transmission tubes are in general use and in most cases are eminently satisfactory. Water transmission tubes may however give rise to the problem of growth of bacteria on the inside of the tube. This is because water companies are increasingly adopting the practice of treating prepurified water destined to be drinking water not with chlorine, but with ozone or with UV light, in combination with filtration through a sand bed. This results in a better taste of the water and smaller amounts of organic chlorine compounds in the water, which are considered problematic in terms of public health. It is now found, however, that in the case of water purified in this manner in tubes of certain materials, in particular polyolefin materials, the gradual fouling by bacteria proceeds more rapidly than in tubes made of other materials. Particularly in tubes of polyethylene (PE) and to a lesser extent in tubes of polypropylene (PP) and polybutylene (PB) is relatively rapid fouling by bacteria observed.

To overcome the problem of fouling by bacteria in tubes designed to transport water it has been proposed to provide the tube with an inner layer in which a bactericidal substance has been incorporated (see for example US-A-5332160). Given the toxicity of the added substances, these tubes are not suitable, however, for drinking-water lines.

WO97/30798 discloses a water transmission tube according to the preamble of claim 1. Said tube contains an inner layer of a polymer mixed with a metal. Said metal imparts bacteriostatic properties to the tube.

It is further found that many organic substances such as solvents readily permeate the wall of a tube of a polyolefin material. As a result, the use of water transmission tubes of polyethylene, polypropylene or polybutylene in soil contaminated with such substances has drawbacks, since the water transported through the pipes can become polluted.

To overcome this problem it has been proposed that tubes to be used under such conditions be provided with a layer which is made of another material and is impermeable or at least much less permeable to the pollutants. Preferably, said layer is then applied to or near the outside. A known material for this purpose is aluminium in the form of a thin foil.

Also known, for example from EP-A-0686797, are multilayer plastic tubes for the purpose of transporting (petro) chemicals, comprising an outer layer on the basis of a polyolefin and an inner layer on the basis of a thermoplastic polyester. EP-A-0686797 states that these tubes are also suitable for transporting drinking water if there is the risk of pollution by diffusion from the outside to the inside, for example if drinking water lines are laid down in contaminated soil. Bacterial growth is not discussed, however.

It is an object of the invention to provide a water transmission tube made of a thermoplastic, in particular of a polyolefin material and more particularly of polyethylene, polypropylene or polybutylene, which tube gives rise to less fouling by bacteria within the tube, the tube preferably being suitable for use even in moderately contaminated soil.

This object is achieved by a water transmission tube according to claim 1.

Preferred embodiments of the water transmission tube according to the invention are defined in claims 2 to 8 inclusive.

It should be noted that the thermoplastics used for the inner layer are not admixed with any additional substances which inhibit bacterial growth, but that these plastics as such, i.e. in the form in which they are customarily used, do not or virtually do not give rise to bacterial growth.

A water transmission tube according to the invention can be fabricated by coextrusion, and tube sections can readily be joined together by means of customary joining techniques. Possible examples are joints by means of (electro-)fusion sockets, sockets with rubber rings and even butt-fused joints. A water transmission tube according to the invention is flexible and therefore highly suitable in cases in which the tube has to be laid in bent and/or coiled form (indoors or service pipes).

Water transmission tubes according to the invention can be used in various fields, the construction of the tube depending on the field of application.

A first field of application is indoors to transport cold and hot water. In this case, the diameters of the tubes are usually relatively small, in the order of magnitude of from 15 to 32 mm. Since for these tubes the permeability to organic substances does not matter, but only bacterial growth is of importance, a thin inner layer is sufficient, for example having a thickness of 0.1 mm. The tube material, i.e. the material of the outer layer, can be polyethylene (PE), especially cross-linked polyethylene, usually referred to as PEX, polypropylene (PP), especially the so-called "random copolymer", or polybutylene (PB). Suitable materials for the inner layer for this field of application are above all polyurethane (PU) and chlorinated polyvinyl chloride (CPVC), both materials retaining their good properties at elevated temperatures.

A second field of application relates to service pipes. In this field of application the external diameters of the tubes are usually in the range from about 32 to 63 mm. The tube materials suitable for this application are, above all, various types of polyethylene, be they HDPE, MDPE or LDPE, the material optionally being cross-linked. Particularly suitable for the inner layer for this cold-water application are polyurethane (PU) and polyvinyl chloride (PVC). Acrylonitrile-butadiene-styrene (ABS) is likewise suitable as a material for the inner layer. Since bacterial growth as well as permeation of pollutants may matter here, the inner layer will often have to be thicker than in the indoors application, since the thickness of the inner layer has a direct effect on the resistance to permeation. Layer thicknesses of from 0.2 to 0.6 mm are eligible for this purpose.

A third field of application is the use as a water mains pipe. The diameters of such pipes are often in the range of from 63 to 630 mm and possibly even larger. For this use too, both permeation and bacterial growth may matter, so that wall thicknesses of the inner layer of from 0.2 to 1.0 mm are desirable.

Experiments have shown that for the same layer thicknesses the permeability of PE to organic substances such as trichloroethylene, toluene, cyclohexanone and phenol is many thousand times larger than the permeability of PVC, PU, ABS.

The table below gives an impression of the permeability ratios for the said substances, the permeability of PVC, PU, ABS and APET being defined as 1. In practice, this permeability will be even smaller.

| Material | Trichloroethylene | Toluene | Cyclohexanone | Phenol |
|---|---|---|---|---|
| HDPE | 100,000 | 5000 | 10,000 | 15,000 |
| PVC | 1 | 1 | 1 | 1 |
| PU | 1 | 1 | 1 | 1 |
| ABS | 1 | 1 | 1 | 1 |
| APET | 1 | 1 | 1 | 1 |

The experiments regarding bacterial growth have shown that in the case of PVC, CPVC, PU and APET under the same conditions the fouling by bacteria was smaller than in the case of PE by at least a factor of 20.

The following tables show examples of embodiments of water transmission tubes according to the invention in various fields of application. The material types PE 80 and PE 100 are PE types having different permitted wall stresses.

### Tables with examples of tube types and their dimensions

- D :: nominal external diameter (mm)
- E1 :: nominal wall thickness of outer layer (mm)
- E2 :: nominal wall thickness of inner layer (mm)
- M1 :: material type of outer layer
- M2 :: material type of inner layer
- PN :: pressure class (bar)
- S :: tube class according to ISO 4065

### 1. TUBES FOR USE INDOORS

| D | S | M1 | E1 | M2 | E2 |
|---|---|---|---|---|---|
| 12 | 5 | PEX/PB | 1.3 | PU/CPVC | 0.1 |
| 16 | 5 | PEX/PB | 1.5 | PU/CPVC | 0.1 |
| 20 | 5 | PEX/PB | 1.9 | PU/CPVC | 0.1 |
| 25 | 5 | PEX/PB | 2.3 | PU/CPVC | 0.1 |

### 2. TUBES FOR USE OUTDOORS

| D | PN | M1 | E1 | M2 | E2 |
|---|---|---|---|---|---|
| 25 | 10 | PE80 | 2.0 | PU/PVC | 0.2 |
| 32 | | | 2.4 | | 0.2 |
| 40 | | | 3.0 | | 0.2 |
| 50 | | | 3.7 | | 0.2 |
| 63 | | | 4.7 | | 0.3 |
| 75 | | | 5.6 | | 0.3 |
| 110 | | | 8.1 | | 0.5 |
| 160 | | | 11.8 | | 0.6 |
| 200 | | | 14.7 | | 0.8 |
| 250 | | | 18.4 | | 1.0 |
| 315 | | | 23.2 | | 1.0 |
| 400 | | | 29.4 | | 1.0 |
| 500 | | | 36.8 | | 1.0 |
| 630 | | | 46.3 | | 1.0 |
| | | | | | |

| D | PN | M1 | E1 | M2 | E2 |
|---|---|---|---|---|---|
| 32 | 8 | PE100 | 2.0 | PU/PVC | 0.6 |
| 40 | | | 2.0 | | 0.6 |
| 50 | | | 2.4 | | 0.6 |
| 63 | | | 3.0 | | 0.6 |
| 75 | | | 3.6 | | 0.6 |
| 110 | | | 5.3 | | 0.6 |
| 160 | | | 7.7 | | 0.6 |
| 200 | | | 9.6 | | 0.6 |
| 250 | | | 11.9 | | 0.6 |
| 315 | | | 15.0 | | 0.8 |
| 400 | | | 19.1 | | 1.0 |
| 500 | | | 23.9 | | 1.0 |

## Claims

1. Water transmission tube made of a thermoplastic and having a wall comprising at least two layers, wherein the outer layer consists of a polyolefin material and the inner layer comprises a thermoplastic and has no bacterial growth-promoting activity, **characterised in that** said inner layer consists of a thermoplastic admixed only with substances required for processing it and not admixed with any additional substances which inhibit bacterial growth, and **in that** said thermoplastic is selected from the group consisting of polyvinyl chloride (PVC), chlorinated polyvinyl chloride (CPVC), thermoplastic polyurethane (PU), and acrylonitrile-butadiene-styrene (ABS).

2. Water transmission tube according to claim 1, wherein the inner layer is less permeable to organic substances than the outer layer.

3. Water transmission tube according to claim 1 or 2, wherein the thickness of the inner layer is smaller by at least a factor of 3 than the thickness of the outer layer.

4. Water transmission tube according to any one of claims 1-3, wherein the inner layer has a thickness in the range of 0.1 - 1.0 mm.

5. Water transmission tube according to any one of claims 1-4, wherein a bonding layer is present between the inner layer and the outer layer.

6. Water transmission tube according to claim 1, wherein said tube is of the type for indoor transport of cold and hot water having an external diameter in the range from 15 to 32 millimetres and having an outer layer selected from the group of polyethylene (PE), especially crosslinked polyethylene, usually referred to as PEX, polypropylene (PP), especially the so-called"random copolymer", or polybutylene (PB), said tube having a thin inner layer, for example having a thickness of 0.1 mm, preferably selected from the group polyurethane (PU) and chlorinated polyvinyl chloride (CPVC).

7. Water transmission tube according to claim 1, wherein said tube is a service pipe having an external diameter in the range from 32 to 63 mm and having an outer layer of polyethylene, e.g. HDPE, MDPE or LDPE, the material optionally being cross-linked, and the inner layer having a thicknesses from 0.2 to 0.6 mm.

8. Water transmission tube according to claim 1, wherein said tube is a water mains pipe having an external diameter in the range from 63 to 630 mm and the wall thicknesses of the inner layer being in the range from 0.2 to 1.0.

## Patentansprüche

1. Wasserrohrleitung aus einem thermoplastischen Material mit einer Wand, die zumindest zwei Schichten umfasst, wobei die äußere Schicht aus einem Polyolefinmaterial besteht und die innere Schicht einen Thermoplasten umfasst und keine Bakterienwachstum fördernde Wirksamkeit hat, **dadurch gekennzeichnet, dass** die innere Schicht aus einem Thermoplast besteht, nur Substanzen beigemischt sind, die erforderlich sind für die Bearbeitung und keine zusätzlichen Substanzen beigemischt sind, die das Bakterienwachstum hemmen, und wobei der Thermoplast ausgewählt ist aus einer Gruppe enthaltend Polyvinylchlorid (PVC), chloriertes Polyvinylchlorid (CPVC), thermoplastisches Polyurethan (PU) und Acrylnitril-Butadien-Styrol (ABS).

2. Wasserrohrleitung nach Anspruch 1, wobei die innere Schicht für organische Substanzen weniger durchlässig ist als die äußere Schicht.

3. Wasserrohrleitung nach Anspruch 1 oder 2, wobei die Dicke der inneren Schicht um mindestens einen Faktor 3 kleiner ist als die Dicke der äußeren Schicht.

4. Wasserrohrleitung nach einem Ansprüche 1 bis 3, wobei die innere Schicht eine Dicke in dem Bereich von 0.1 mm - 1.0 mm hat.

5. Wasserrohrleitung nach einem der Ansprüche 1 bis 4, in welchem eine Verbindungsschicht vorhanden ist zwischen der Innenschicht und der Außenschicht.

6. Wasserohrleitung nach Anspruch 1, wobei das gesamte Rohr für den Transport von kaltem und heißem Wasser im Hause ausgebildet ist, einen Außendurchmesser in dem Bereich von 15 bis 32 Millimetern und eine Außenschicht hat, die ausgewählt ist aus der Gruppe der Polyethylene (PE), insbesondere vernetztem Polyethylen, gewöhnlich bezeichnet als PEX, Polypropylene (PP), insbesondere dem so genannten "Random-Copolymer", oder Polybutylene (PB), wobei das Rohr eine dünne innere Schicht, zum Beispiel mit einer Dicke von 0,1 mm, vorzugsweise ausgewählt aus der Gruppe Polyurethan (PU) und chloriertem Polyvinylchlorid (CPVC) hat.

7. Wasserohrleitung nach Anspruch 1, wobei das Rohr eine Versorgungsleitung mit einem Außendurchmesser in dem Bereich von 32 bis 63 mm ist und eine äußere Schicht aus Polyethylen hat, z.B. HDPE, MDPE oder LDPE hat, wobei das Material optional vernetzt ist, und die innere Schicht eine Dicke von 0,2 mm bis 0,6 mm hat.

8. Wasserrohrleitung nach Anspruch 1, wobei das gesamte Rohr ein Wasserhauptrohr ist mit einem äußeren Durchmesser in dem Bereich von 63 mm bis 630 mm und einer Wanddicke der inneren Schicht in dem Bereich von 0,2 mm bis 1,0 mm hat.

## Revendications

1. Tuyau de transport d'eau constitue d'une matière thermoplastique et ayant une paroi comprenant au moins deux couches, dans lequel la couche extérieure consiste en une matière polyoléfinique et la couche intérieure comprend une matière thermoplastique et n'a pas d'activité favorisant la croissance bactérienne, **caractérisé en ce que** ladite couche intérieure consiste en une matière thermoplastique mélangée seulement avec les substances nécessaires à sa mise en oeuvre et non mélangée avec de quelconques substances additionnelles qui inhibent la croissance bactérienne, et **en ce que** ladite matière thermoplastique est choisie dans le groupe formé par le chlorure de polyvinyle (PVC), le chlorure de polyvinyle chloré (CPVC), le polyuréthanne thermoplastique (PU) et l'acrylonitrile-butadiène-styrène (ABS).

2. Tuyau de transport d'eau selon la revendication 1, dans lequel la couche intérieure est moins perméable aux substances organiques que la couche extérieure.

3. Tuyau de transport d'eau selon la revendication 1 ou 2, dans lequel l'épaisseur de la couche intérieure est plus petite d'au moins un facteur 3 que l'épaisseur de la couche extérieure.

4. Tuyau de transport d'eau selon l'une quelconque des revendications 1 à 3, dans lequel la couche intérieure a une épaisseur comprise dans l'intervalle de 0,1 à 1,0 mm.

5. Tuyau de transport d'eau selon l'une quelconque des revendications 1 à 4, dans lequel une couche de liaison est présente entre la couche intérieure et la couche extérieure.

6. Tuyau de transport d'eau selon la revendication 1, dans lequel ledit tuyau est du type destiné au transport en intérieur d'eau froide et d'eau chaude ayant un diamètre externe compris dans l'intervalle de 15 à 32 millimètres et ayant une couche extérieure choisie dans le groupe formé par le polyéthylène (PE), notamment le polyéthylène réticulé, habituellement désigné par PEX, le polypropylène (PP), notamment le "copolymère statistique", ou le polybutylène (PB), ledit tuyau ayant une mince couche intérieure, par exemple ayant une épaisseur de 0,1 mm, choisie de préférence dans le groupe formé par le polyuréthanne (PU) et le chlorure de polyvinyle chloré (CPVC).

7. Tuyau de transport d'eau selon la revendication 1, dans lequel ledit tuyau est une conduite de branchement ayant un diamètre externe compris dans l'intervalle de 32 à 63 mm et ayant une couche extérieure de polyéthylène, par exemple HDPE, MDPE ou LDPE, la matière étant facultativement réticulée, et la couche intérieure ayant une épaisseur de 0,2 à 0,6 mm.

8. Tuyau de transport d'eau selon la revendication 1, dans lequel ledit tuyau est une conduite de distribution ayant un diamètre externe compris dans l'intervalle de 63 à 630 mm et les épaisseurs de paroi de la couche intérieure étant comprises dans l'intervalle de 0,2 à 1,0.
